# EUROPÄISCHE PATENTSCHRIFT

(11) **EP 0 778 694 B1**
(45) Veröffentlichungstag und Bekanntmachung des Hinweises auf die Patenterteilung: **09.10.2002**
(21) Anmeldenummer: 96117670.8
(22) Anmeldetag: 05.11.1996
(51) Int. Cl.: H04N 1/387

(54) **Verfahren und Vorrichtung zur Bildverarbeitung**
Image processing method and apparatus
Procédé et dispositif de traitement d'images

(30) Priorität: 07.12.1995 DE 19545626
(43) Veröffentlichungstag der Anmeldung: 11.06.1997
(73) Patentinhaber: Agfa-Gevaert AG, 51373 Leverkusen (DE)
(72) Erfinder: Wagensonner, Eduard, 85609 Aschheim (DE); Hujer, Friedrich, 85238 Petershausen (DE)

(56) Entgegenhaltungen:
- EP-A- 0 095 514
- DE-C- 3 525 807
- JP-A- 7 234 454
- US-A- 5 027 230
- US-A- 5 383 027

## Beschreibung

Die Erfindung betrifft ein Verfahren und eine Vorrichtung zur Bildverarbeitung nach dem Oberbegriff des Anspruchs 1 bzw. des Anspruchs 15.

Derartige Verfahren sind seit langem bekannt. In der EP 308 967 A2 ist beispielsweise ein Gerät beschrieben, mit dem Bilder, die optisch auf fotografischem Film gespeichert sind, optoelektronisch mit einer Kamera abgetastet werden und die dabei erzeugten Bildsignale einem elektronischen Bildverarbeitungsprozeß unterworfen werden. Bei diesem elektronischen Bildverarbeitungsprozeß werden die jeweils abgetasteten Bilder in einem Speicher gesammelt, bis alle Bilder des jeweils abzutastenden fotografischen Films vollständig gespeichert sind. Der Film wird dazu jeweils über eine Abtast- und Kopierbühne transportiert, in der die Bilder einerseits von der Farbkamera aufgenommen werden und andererseits direkt auf fotografisches Material kopiert werden. Nachdem alle Bilder derart abgetastet und kopiert wurden, wird auf das fotografische Material das elektronisch erzeugte Übersichtsbild mit allen, den Film enthaltenen Bildern gemeinsam in einem Vorgang über eine Kathodenstrahlröhre auf das fotografische Material belichtet. Derartige Übersichts-Bilder eines zusammengehörenden fotografischen Auftrags werden Indexprint genannt.

Auch in der EP 629 908 A2 ist ein Indexprinter der o. g. Art beschrieben. Auch hier werden die jeweiligen Bildvorlagen zunächst optisch auf ein Kopiermaterial kopiert, die Bildvorlagen optoelektronisch abgetastet und das elektronisch erzeugte Übersichtsbild später auf ein Kopiermaterial belichtet.

In der DE 36 28 917 A1 ist ebenfalls ein System beschrieben, bei dem Bilder eines Farbfilms mit einer Fernsehkamera abgetastet werden. Die Bilder werden hier in einem Bildzusammensetzabschnitt mit Zusatz-Informationen versehen und dann über eine Kathodenstrahl-Belichtungseinheit auf fotografisches Material belichtet. Bilder, die aus mehreren Vorlagen des Farbfilms zusammengesetzt werden, sind hier jedoch nicht vorgesehen. Im Bildzusammensetzabschnitt werden hier nur Schriften und Zeichen zum Zwecke einer Ausweiserstellung zusammengefügt.

Aus der japanischen Patentanmeldung JP 07-234454 A sind ebenfalls ein Verfahren und eine Vorrichtung zur Verarbeitung von Bildern, die auf einem Medium gespeichert sind, bekannt. Die auf dem Medium enthaltenen Bildinformationen mehrerer Bilder werden gelesen und zur Erzeugung eines Indexprints an ein Kompositionsmittel weitergeleitet. In diesem Kompositionsmittel wird die Anzahl von zur Verfügung stehenden Bilddaten eines jeden gelesenen Bildes reduziert. Die Bilddaten der einzelnen Bilder eines Auftrages werden anschließend mit einer Indexformatvorlage überlagert, die das Format des Indexprints bestimmt. Sowohl die Bilddaten der einzelnen Bilder als auch der zusammengestellte Indexprint werden zur Ausgabe an einer Druckeinrichtung mittels verschiedener Bildverarbeitungsalgorithmen verarbeitet. Diese Verarbeitung erfolgt sowohl für die Einzelbilder als auch für den Indexprint in gleicher Weise. Eine Verarbeitung ausschließlich der Einzelbilder, die unabhängig ist von der Verarbeitung des Indexprints, erfolgt nicht. Daher müssen auch die Indexprintdaten die komplette Bildverarbeitung durchlaufen, was aufwendig ist und zusätzliche Zeit zur Verarbeitung der Bilddaten benötigt.

Demgegenüber ist die Aufgabe der vorliegenden Erfindung, ein Verfahren und eine Vorrichtung zur Verarbeitung von Bildmedien zu schaffen, auf denen viele Bilder gespeichert sind, wobei schnell und einfach gute Kopien der einzelnen Bilder in verschiedenen Varianten erzeugbar sind.

Diese Aufgaben werden gelöst durch die Merkmale des Verfahrens gemäß Anspruch 1 und der Vorrichtung gemäß Anspruch 15. Vorteilhafte Ausführungsformen der Erfindung sind Gegenstand der Unteransprüche.

Erfindungsgemäß ist vorgesehen, daß die elektronisch erzeugten Bildsignale bildweise mindestens zweifach mit verschiedenen Parametern elektronisch verarbeitet werden. Die dabei jeweils verarbeiteten Bildsignale werden dann ein und derselben Druckeinrichtung zugeführt. Insbesondere zur parallelen Erzeugung von Einzelkopien und eines Übersichtsbildes für alle Bilder eines Auftrages ist vorgesehen, die abgetasteten Bildsignale eines Bildes jeweils sowohl direkt einer Druckeinrichtung zuzuführen, mit der Kopien der einzelnen Bilder erzeugt werden, als auch einem Kompositionsmittel, indem mehrere Bilder des Aufnahmemediums zu einem Übersichtsbild zusammengestellt werden. Nach dem Drucken der Einzelbilder wird mit ein und demselben Drucker das Übersichtsbild als positives Bild ausgegeben. Die Bildsignale, die direkt in Richtung Drucker weitergeleitet werden, durchlaufen eine separate Bildverarbeitungsstufe, genauso können die dem Kompositionsmittel zugeführten Bildsignale eine Bildverarbeitungsstufe durchlaufen. Die derart weiter verarbeiteten Bildsignale können über einen gemeinsamen Einkoppel-Knoten wieder zusammengeführt werden und dann der Druckstufe zugeführt werden.

Dadurch können die Bilder einerseits sehr schnell als individuelle Einzelkopien erzeugt werden, andererseits das zugehörige Übersichtsbild sofort nach Fertigstellen der Einzelkopien in zeitlicher Reihenfolge geordnet zu den entsprechenden Einzelkopien ausgegeben werden.

Die Bildvorlagen können optisch auf einem fotografischen Film oder auf einer optischen Bildplatte oder magnetisch-auf-einem magnetischen Träger wie einem Magnetband oder einer Diskette oder digital in einem Halbleiterspeicher gespeichert sein.

Die an die Kompositionsmittel ausgekoppelten Bildsignale können einen Filter durchlaufen, in dem die Bildsignalmenge deutlich reduziert wird. Dies führt zu einer Geschwindigkeitserhöhung bei der Erzeugung der komponierten Bilder und ermöglicht, die dort verwendeten Speicherkomponenten auf ein Minimum zu beschränken.

Statt oder zusätzlich zu der Erzeugung des Übersichtsbildes kann auch vorgesehen werden, die bildweise erzeugten Bildsignale mehrfach für verschiedene Ausgabe-Varianten der Einzelbilder zu nutzen. Als Ausgabevariante stehen beispielsweise zweifache Ausgabe und/oder mehrfache Ausgabe in verschiedenen Formaten zur Verfügung.

Im folgenden werden Einzelheiten der Erfindung anhand von zwei Figuren näher erläutert.

Es zeigen:
Fig. 1 eine elektronische Bildverarbeitungseinrichtung und
Fig. 2 ein belichtetes fotografisches Material.

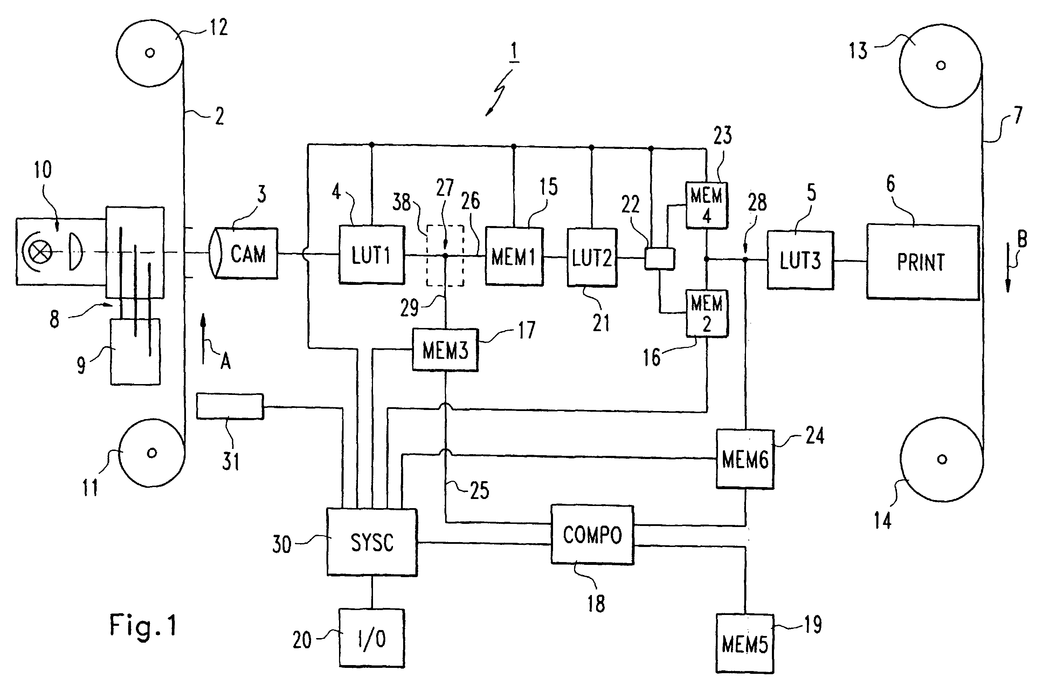

In Figur 1 ist eine elektronische Bildverarbeitungseinrichtung 1 dargestellt. In ihr wird ein fotografischer Film 2 von einer Filmspule 11 auf eine Filmspule 12 in Richtung A umgespult. Auf der Abwickelspule 11 befinden sich eine Vielzahl von Einzelfilmen, die mit geeigneten Mitteln, sogenannten Splicebändern zu einem großen Fotoauftrag zusammengefaßt sind. Beim Umspulen durchläuft ein Film 2 eine Abtaststation. Innerhalb dieser Station können Mittel vorgesehen werden, die den Transport durch die Station hochgenau, d. h. mit möglichst konstanter Geschwindigkeit steuern. Dazu kann der Filmtransport innerhalb der Abtaststation von dem Umspulvorgang entkoppelt werden, indem vor bzw. der Abtaststation Schlaufen vorgesehen werden sowie separate Antriebe für das Umspulen und das Abtasten.

Der Film 2 wird in der Abtaststation von einem geeigneten, optoelektronischen Abtastmittel bild- und punktweise abgetastet. Die Abtastmittel umfassen hier eine Kamera 3 mit einem CCD-Zeilensensor, der die auf dem Film 2 gespeicherten Bilder jeweils zeilenweise abtastet. Für jede Zeile sind drei Abtastvorgänge vorgesehen, wobei jedem Abtastvorgang ein Farbfilter 8 in einer der Grundfarben Rot, Grün oder Blau vor eine weiße Beleuchtungs-Lichtquelle 10 geschwenkt wird. Dazu ist eine entsprechende Filtersteuerung 9 vorgesehen, die das Ein- bzw. Ausschwenken der Farbfilter 8 steuert.

Alternativ zum zeilenweisen, seriellen Abtasten in den drei Grundfarben kann auch ein Dreifarben-Bildsensor vorgesehen sein, der die Bildsignale der drei Farben gleichzeitig erfaßt. Statt einem CCD-Sensor können auch entsprechende andere bekannte Systeme zum Abtasten von Bildvorlagen verwendet werden, z. B. sogenannte Flying-Spot-Kameras.

Innerhalb des Filmverarbeitungsgeräts 1 findet nach dem Abtasten der Bildsignale in oder außerhalb der Kamera 3 eine kameraspezifische Signalverarbeitung in einer Signalverarbeitungsstufe 4 statt. Dabei finden vorzugsweise sogenannte Look-up-Tabellen Verwendung. Nach Durchlaufen der abtastspezifischen Bildverarbeitung 4 können die Bildsignale gespeichert werden. Dies ist jedoch nicht unbedingt erforderlich. Die derart verarbeiteten Bildsignale gelangen dann an einen Signalknoten 27, an dem sie einerseits in einen Eingangsspeicher 15 (MEM 1) geschrieben werden. Andererseits werden die Bildsignale vom Knoten 27 direkt in den Speicher 17 (MEM 3) einer Bild-Kompositionsschaltung 18 weitergeleitet. Der Knoten 27 kann eine als Parallelschaltung ausgebildete Datenabzweigung sein oder z. B. durch einen Bildsignalspeicher realisiert werden, aus dem die Bildsignale gleichzeitig in die beiden oben genannten Signalkanäle zur getrennten Weiterverarbeitung in den beiden Kanälen 26 und 29 geleitet werden. In Fig. 1 ist ein solcher Bildsignalspeicher 38 angedeutet.

Im Kanal 26 werden die Bildsignale zum Druck-Speicher 15 geleitet, im Kanal 29 zum Eingangs-Bildspeicher 17 der Kompositionsschaltung 18. Die Kompositionsschaltung 18 sorgt dafür, daß die Bildsignale mit einem im Steuerungs-Computer 30 erzeugten Bild-Layout überlagert werden. Dazu können in einem Speicher 19, der mit der Kompositionsschaltung 18 verbunden ist, vorgegebene Layout-Masken gespeichert sein, welche für verschiedene Ausgabearten von Übersichtsbildern geeignet sind. Diese Layout-Masken können über den System-Computer 30 und eine Datenübergabe-Schnittstelle 20 jederzeit verändert werden. Die Bilddaten, welche über die Leitung 25 an die Kompositionsstufe 18 geleitet werden, können eine Reduktionsstufe durchlaufen, in der die Datenmenge reduziert wird. Dazu ist beispielsweise eine Filterschaltung mit einem 3 x 3- oder einem 9 x 9-Filter geeignet, die aus 9 oder 81 Bildersignalen je ein neues Signal berechnet.
Von dem Eingangs-Bildspeicher 17 der Komponenten zur Erstellung des Indexprints werden die Bildsignale über die Leitung 25 an die Kompositionsschal tung 18 geleitet. Von der Kompositionsschaltung 18 werden die Bildsignale an den Bildspeicher 24 (MEM 6) weitergeleitet, indem die Bilder eines Films in geordneter Reihenfolge, d. h. in derselben Reihenfolge wie auf dem Film 2 gespeichert, abgelegt werden. Im Speicher 24 wird das derart erzeugte Gesamtbild, der Indexprint, solange gespeichert, bis alle Bilder des Films eingelesen und die Einzelbilder direkt über die Drucker-Signalverarbeitungsstufe 21 bzw. die Bildspeicher 16 und 23 über den Drucker 6 auf fotografisches Material 7 ausgegeben worden sind.

Die Bildsignale in der Drucker-Datenleitung 26 werden vom Bildspeicher 15 zunächst in eine bildspezifische Signalverarbeitungsstufe 21 geleitet, in der sie bildspezifisch modifiziert werden. Von dort werden sie an einen Umschalter 22 abgegeben, der jeweils aufeinanderfolge Bilder alternierend in die Ausgabespeicher 16 (MEM 2) bzw. 23 (MEM 4) weiterleitet. Von dort können sie auf den Signal-Einkoppelknoten 28 weitergeleitet werden, von dem aus sie nochmals eine ausgabespezifische Bildverarbeitungsstufe 5 durchlaufen. Diese Stufe 5 paßt die Bildsignale an die Ausgabecharakteristik der Belichtungseinheit 6 an. Die Belichtungseinheit 6 ist ein Hochgeschwindigkeits-Drucker zur Belichtung von fotografischem Ausgabematerial, insbesondere Colornegativ-Kopiermaterial. Sie umfaßt z. B. eine leistungsfähige Kathodenstrahlröhre, eine Laser-Aufbelichtungseinheit oder eine mit einer hellen Lichtquelle zusammenwirkende LCD-Anordung oder eine Lichtventilröhre (z. B. eine PLZT-Röhre). Selbstverständlich könnte hierzu auch ein schneller Printer verwendet werden, der nicht mit fotografischem Material zusammenwirkt, beispielsweise ein Tintenstrahldrucker.

Mit der Belichtungseinheit 6 werden die jeweils ankommenden Bilder auf ein Ausgabemedium 7 ausgegeben. Im vorliegenden Fall ist das Ausgabemedium fotografisches Negativ-Kopiermaterial. Dieses wird einer Papierabwickelspule 13 auf eine Aufwickelspule 14 in Richtung B umgespult. Zur direkten fotografischen Weiterverarbeitung kann es aber auch alternativ zur Papieraufwickelspule direkt in ein fotografisches Entwicklungsgerät ausgegeben werden, in welchem das Fotopapier 7 einem chemischen Entwicklungsprozeß unterworfen wird, bevor es als positive Kopie erscheint. Wenn die Filme 2 Colornegative sind, und das Fotopapier 7 einen Negativ-Entwicklungsprozeß durchläuft, erfolgt die elektronische Signalverarbeitung der Bildsignale wie oben geschildert. Wenn die Filme 2 positive Bildvorlagen sind oder z. B. die auf dem Medium 2 einer optischen Bildplatte gespeicherten Bilder positiv abgespeichert sind, so wird innerhalb der elektronischen Bildverarbeitungsstufen eine zusätzliche Invertierungsstufe gemäß dem Deutschen Patent 35 25 807 C vorgesehen. Diese elektronische Invertierungsstufe invertiert das positiv abgetastete Bild zu einem negativen Bild, das über die Ausgabestufe 6 auf negatives Kopiermaterial 7 aufbelichtet wird. Nach dem anschließenden chemischen Entwicklungsprozeß des negativen Kopiermaterials ist die ausgegebene Kopie des Bildes wieder positiv.

Am Ende eines Auftrags, d. h., wenn alle Einzelbilder eines Films am Printer 6 ausgegeben sind, wird der Indexprint aus dem Speicher 24 auf dem Printer 6 ausgegeben. Damit ist der Indexprint automatisch zu den übrigen Bildern des Auftrags zusortiert.

Am Knoten 28 sind die jeweils ausgelesenen Bildsignale aus den Speichern 16, 23 und 24 an die Bildverarbeitungsstufe 5 der Druckstufe 5, 6 weiterleitbar. Der gesamte Datenfluß, insbesondere das Einlesen und Auslesen der Bildsignale in die verschiedenen Speicher sowie die Verarbeitung der Bildsignale in den lookup-Tabellen, wird dabei vom Steuerungs-Computer 30 überwacht. Dieser kann über die Schnittstelle 20 auftragsbezogene Daten entgegennehmen, mit denen z. B. für jeden Filmauftrag angegeben ist, wieviele Bildkopien von jedem Bild gewünscht werden und die Signalverarbeitungsstufen entsprechend steuern. Dabei kann auch das gewünschte Kopieformat, z. B. 9 x 13 cm, 10 x 15 cm des sogenannten Standardformats 2 : 3 oder auch andere Formate des High-Vision-Formats 16 : 9 oder des Panorama-Formats 1 : 3, angegeben sein. Zusätzlich können film- oder bildweise Daten über eine Leseeinrichtung 31, z. B. einen Magnetleser oder eine optoelektronische Leseeinrichtung, direkt am Film 2 gelesen werden oder z. B. von einem Auftragsspeichermedium, wie einer Auftragskarte oder einer Diskette übernommen werden. Auch eine direkte Übertragung der Daten vom Kunden über dessen Heimcomputer und/oder ein allgemeines Datennetz, wie Internet, ist möglich. Der Computer 30 steuert anhand dieser Daten sowohl die Erzeugung der Einzelbilder im Datenkanal 26 als auch die Erzeugung der Indexprints im Kanal 25, 29. Dabei wird die gewünschte Bildanzahl durch mehrfaches serielles Erstellen der Einzelbilder erzeugt, indem das Auslesen der Bildsignale eines Bildes aus den Speichern 16, 23 pro Bild mehrfach hintereinander erfolgt. Außerdem wird ein dem gewünschten Format des Bildes entsprechendes Layout aus dem Speicher 19 zur Erstellung des Indexprints bereitgestellt und/oder die Ausgabe der Einzelbilder im Kanal 26 entsprechend gesteuert. Das Layout kann sowohl bildweise im Kanal 26 automatisch variiert werden, wenn unterschiedliche Bilder eines Films unterschiedliche Formate haben, als auch insgesamt für einen Indexprint im Kanal 25, z. B. wenn alle Bilder eines Films ein bestimmtes Format haben. Im Kanal 26 kann zur Anpassung der Bildsignale an das gewünschte Bildformat und/oder an die gewünschte Orientierung des Bildes (Hochformat/Querformat) eine Formatverarbeitungsstufe vorgesehen sein. Diese kann sowohl elektronische Signalfilter, Interpolationsoder Dezimationsstufen als auch Speicherelemente umfassen, aus denen die Bildsignale wahlweise spalten oder zeilenweise ausgelesen werden. Der Knoten 28 kann z. B. als Umschalter über eine geeignete Multiplexschaltung oder als elektronischer Bildspeicher ausgebildet sein, der von einer Steuerung derart gesteuert wird, daß die jeweils gewünschten Bildsignale aus den Speichern 16, 23 oder 24 an die Druckstufe 5, 6 weitergeleitet werden.

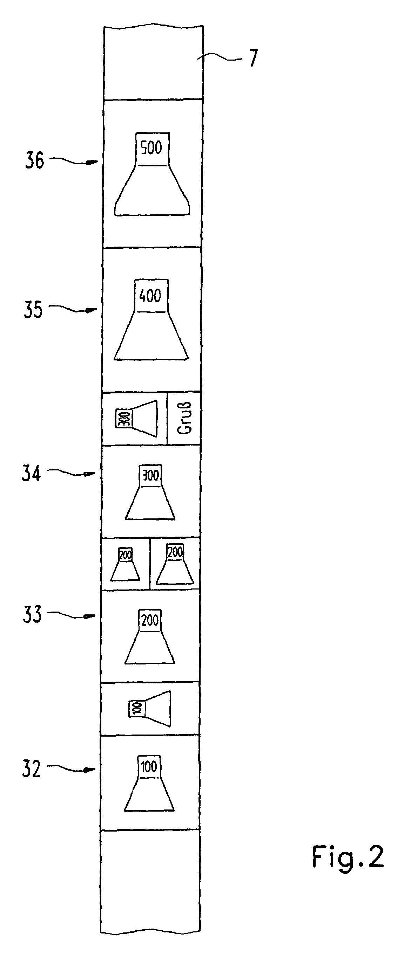

Figur 2 zeigt ein Beispiel, wie aufeinanderfolgende Bilder auf das Aufzeichnungsmedium 7, hier Fotopapier, belichtet werden können. Die Bilder 35, 36 wurden hier jeweils einfach, d. h. in einem bestimmten Format jeweils einmal auf das Fotopapier 7 belichtet. Die Bilder 32, 33 und 34 wurden dagegen jeweils mehrfach auf das Fotopapier 7 belichtet. Bild 32 ist zweimal in unterschiedlichem Format belichtet (sog. Duoprint). Bei Bild 33 ist eines der beiden Formate doppelt belichtet (sog. Triprint) und bei Bild 34 ist eines der beiden Formate mit einem besonderen Layout, hier einem Grußkarten-Layout, versehen. In der Einrichtung gemäß Fig. 1 sind derartige, mehrfache Ausgaben eines Bildmotivs ohne weiteres möglich, indem die in einem Speicher, z. B. dem Speicher 15 oder dem Speicher 17, gespeicherten elektronischen Bildsignale mehrfach dem Printer 6 zugeführt werden. Dabei kann in einer der Signalverarbeitungsstufen 4, 18 oder 21, vom Computer 30 gesteuert, auch eine formatspezifische Umwandlung der Bildsignale erfolgen. Die Bildsignale können dabei so manipuliert werden, daß das ausgegebene Bild in seiner Größe und/oder Orientierung gesteuert wird. Ein Verfahren zum elektronischen Zoomen und/oderVerändern der Orientierung des Bildes auf dem Aufzeichnungsmaterial 7 ist z. B. aus der DE 41 20 457 C2 bekannt.

Es wurden Ausführungsbeispiele der Erfindung beschrieben. Selbstverständlich ist es im Rahmen des fachmännischen Könnens ohne weiteres möglich, leichte Abwandlungen der Erfindung anzugeben. Beispielsweise können zusätzliche Bildspeicher vorgesehen werden, um Bildverarbeitungsprozesse zwischen einzelnen Verarbeitungsstufen zeitlich voneinander zu entkoppeln. Es kann sich z. B. auch anbieten, Signalverarbeitungsprozesse, die für beide Ausgabekanäle notwendig sind, wie z. B. die druckerspezifische Signalverarbeitung, bereits vor dem getrennten Weiterleiten der Bildsignale durchzuführen.

## Patentansprüche

1. Verfahren zur Verarbeitung von Bildern, die auf einem Medium (2) gespeichert sind, wobei
- die Bilder punktweise elektronisch abgetastet werden, so daß Bildsignale erzeugt werden, die Bildinformationen der Bilder enthalten, und
- die Bildsignale mit Bildinformationen der Bilder mittels erster Parameter elektronisch verarbeitet werden, so dass die Bildsignale verändert werden, und die verarbeiteten Bildsignale einer Druckeinrichtung (6) zugeführt werden,
**dadurch gekennzeichnet, daß**
- die Bildsignale mit Bildinformationen der Bilder zusätzlich mittels zweiter Parameter verarbeitet werden, die von den ersten Parametern verschieden sind und mit denen die mittels der ersten Parameter verarbeiteten Bildsignale nicht verarbeitet werden, wobei die Bildsignale aufgrund der Verarbeitung mittels der zweiten Parametern verändert werden, und die mittels der zweiten Parameter verarbeiteten Bildsignale, die weiterhin Bildinformationen der Bilder enthalten, der gleichen Druckeinrichtung (6) zugeführt werden.

2. Verfahren nach Anspruch 1, **dadurch gekennzeichnet, daß** mittels der Parameter beim Aufzeichnen der Bilder verschiedene Bildformate und/oder eine verschiedene Anzahl von Bildern mittels der Druckeinrichtung (6) ausgegeben werden.

3. Verfahren nach Anspruch 1 oder 2, **dadurch gekennzeichnet, daß** die Bildsignale einerseits bildweise der Druckereinrichtung (6) zugeführt werden und andererseits einem Kompositionsmittel (17, 18), in dem mehrere Bilder des Mediums (2) zu einem Übersichtsbild zusammengestellt werden.

4. Verfahren nach Anspruch 3, **dadurch gekennzeichnet, daß** das Übersichtsbild nach dem Drucken der Einzelbilder auf der Druckeinrichtung (6) ausgegeben wird.

5. Verfahren nach einem der Ansprüche 1 bis 4, **dadurch gekennzeichnet, daß** die Bilder optisch auf einem fotografischen Film (2) gespeichert sind und daß die Abtastung optoelektronisch erfolgt.

6. Verfahren nach einem der Ansprüche 1 bis 4, **dadurch gekennzeichnet, daß** die Bilder optisch auf einer Bildplatte, magnetisch auf einem magnetischen Medium oder digital in einem Halbleiterspeicher gespeichert sind.

7. Verfahren nach einem der Ansprüche 3 bis 6, **dadurch gekennzeichnet, daß** die Menge der Bildsignale, die dem Kompositionsmittel (18) bildweise zugeführt wird, reduziert wird.

8. Verfahren nach Anspruch 7, **dadurch gekennzeichnet, daß** die Datenreduktion durch eine Filterung erfolgt, bei der jeweils mehrere Eingangsbildsignale zu einem Ausgangsbildsignal berechnet werden.

9. Verfahren nach einem der Ansprüche 2 oder 3, **dadurch gekennzeichnet, daß** die Bildsignale vor dem getrennten Verarbeiten mittels der ersten und der zweiten Parameter einer gemeinsamen Signalverarbeitungsstufe (4) zugeführt werden.

10. Verfahren nach einem der vorhergehenden Ansprüche, **dadurch gekennzeichnet, daß** die dem Drucker (6) zuzuführenden, mittels der ersten Parameter verarbeiteten Bildsignale zwischengespeichert werden, bevor sie einen Knoten (28) durchlaufen, an dem die mittels der zweiten Parameter verarbeiteten Bildsignale eingekoppelt werden.

11. Verfahren nach einem der vorhergehenden Ansprüche, **dadurch gekennzeichnet, daß** die Bilder in dem Medium (2) als positive Vorlagen gespeichert sind und daß die Bildsignale bei der Signalverarbeitung elektronisch derart invertiert werden, daß die Kopien nach Aufzeichnung auf einem negativen Kopierträger ebenfalls positiv sind.

12. Verfahren nach einem der vorhergehenden Ansprüche, **dadurch gekennzeichnet, daß** die Erzeugung der Einzelbilder und/oder des Übersichtsbildes mit auftragsspezifischen Informationen zur Verarbeitung eines Filmauftrags, wie Anzahl der Kopien pro Bild oder Format der Kopien, gesteuert wird.

13. Verfahren nach Anspruch 12, **dadurch gekennzeichnet, daß** die auftragsspezifischen Daten über eine Schnittstelle (20) eingespeist werden.

14. Verfahren nach Anspruch 12 oder 13, **dadurch gekennzeichnet, daß** die auftragsspezifischen Daten von dem Vorlagemedium (2) gelesen werden.

15. Vorrichtung zur Verarbeitung von Bildern, die auf einem Medium (2) abgespeichert sind, mit
- einem Abtastmittel (3, 8, 9, 10) zum punktweisen, elektronischen Abtasten der Bilder, so daß Bildsignale erzeugbar sind, die Bildinformationen der Bilder enthalten, und
- einem Zuführmittel (27) zum Zuführen der Bildsignale zu einem Kompositionsmittel (17, 18, 24), das zum Verarbeiten und Verändern der Bildsignale mittels erster Parameter, zum Zusammenstellen und zum Abspeichern eines Übersichtsbildes dient, und von welchem Bildinformationen dieses Übersichtsbildes einer Druckeinrichtung (6) zuführbar sind,
**dadurch gekennzeichnet, daß**
- die Vorrichtung ein Signalverarbeitungsmittel (21) zum Verarbeiten und Verändern der Bildsignale mittels zweiter Parameter aufweist, die von den ersten Parametern verschieden sind,
- das Zuführmittel (27) so ausgestaltet ist, daß es Bildsignale neben dem Zuführen zu dem Kompositionsmittel (17, 18, 24) dem Signalverarbeitungsmittel (21) zuführt, so daß die dem Signalverarbeitungsmittel (21) zugeführten Bildsignale mittels der zweiten Parameter verarbeitet werden, mittels derer die dem Kompositionsmittel (17, 18, 24) zugeführten Bildsignale nicht verarbeitet werden, und die mittels des Signalverarbeitungsmittels (21) verarbeiteten Bildsignale, die weiterhin Bildinformationen der Bilder enthalten, der gleichen Druckeinrichtung (6) zuführbar sind, wie die mittels der ersten Parameter verarbeiteten Bildsignale.

16. Vorrichtung nach Anspruch 15, **dadurch gekennzeichnet, daß** die Zuführmittel (27) zum zweiseitigen Datentransfer mindestens einen Bildspeicher (38) umfassen.

17. Vorrichtung nach Anspruch 15 oder 16, **dadurch gekennzeichnet, daß** das Medium (2) ein fotografischer Film ist und daß die Abtastmittel (3) optoelektronischer Art sind.

## Claims

1. Method for processing images stored on a medium (2)
- the images being electronically scanned point-by-point, so image signals containing the image data of the images are produced, and
- the image signals with image data of the images are electronically processed by means of first parameters, so the image signals are changed and the processed image signals are supplied to a printing apparatus (6),
**characterised in that**
- the image signals with image data of the images are also processed by means of second parameters which are different from the first parameters and with which the image signals processed by means of the first parameters are not processed, the image signals being changed owing to the processing by means of the second parameters, and the image signals still containing image data of the images and processed by means of the second parameters being supplied to the same printing apparatus (6).

2. Method according to claim 1, **characterised in that**, by means of the parameters, when the images are recorded, different image formats and/or a differing number of images are displayed by means of the printing apparatus (6).

3. Method according to claim 1 or 2, **characterised in that** the image signals are supplied image-by-image, on the one hand, to the printing apparatus (6) and, on the other hand, to a composition means (17, 18), in which a plurality of images of the medium (2) are combined into an overview image.

4. Method according to claim 3, **characterised in that** the overview image is displayed after printing the individual images on the printing apparatus (6).

5. Method according to any one of claims 1 to 4, **characterised in that** the images are stored optically on a photographic film (2) and **in that** scanning is optoelectronic.

6. Method according to any one of claims 1 to 4, **characterised in that** the images are stored optically on a video disc, magnetically on a magnetic medium or digitally in a semiconductor memory.

7. Method according to any one of claims 3 to 6, **characterised in that** the quantity of image signals supplied image-by-image to the composition means (18) is reduced.

8. Method according to claim 6, **characterised in that** data reduction takes place via a filtering in which a plurality of respective image input signals are computed to an image output signal.

9. Method according to either one of claims 2 or 3, **characterised in that** the image signals are supplied to a common signal processing stage (4) prior to separate processing by means of the first and second parameters.

10. Method according to any one of the preceding claims, **characterised in that** the image signals to be supplied to the printer (6) and processed by means of the first parameters are temporarily stored before passing through a node (28) to which the image signals processed by means of the second parameters are coupled.

11. Method according to any one of the preceding claims, **characterised in that** the images are stored in the medium (2) as positive originals and **in that** the image signals are electronically inverted during signal processing in such a way that the copies are also positive after recording on a negative copying carrier.

12. Method according to any one of the preceding claims, **characterised in that** production of individual images and/or the overview image with order-specific data for processing a film order, such as number of copies per image or format of the copies, is controlled.

13. Method according to claim 12, **characterised in that** the order-specific data is stored via an interface (20).

14. Method according to claim 12 or 13, **characterised in that** the order-specific data is read off from the original medium (2).

15. Device for processing images stored in a medium (2) with
- a scanning means (3, 8, 9, 10) for point-by-point, electronic scanning of the images, so image signals containing image data of the images can be produced, and
- a supply means (27) for supplying the image signals to a composition means (17, 18, 24) serving to process and change the image signals by means of first parameters, to combine and store an overview image, and from which image data of this overview image can be supplied to a printing apparatus (6),
**characterised in that**
- the device has a signal processing means (21) for processing and changing the image signals by means of second parameters which are different from the first parameters,
- the supply means (27) is designed such that it supplies image signals to the signal processing means (21) in addition to supplying them to the composition means (17, 18, 24), so the image signals supplied to the signal processing means (21) are processed by means of the second parameters, by means of which the image signals supplied to the composition means (17, 18, 24) are not processed and the image signals still containing image data of the images and processed by means of the signal processing means (21) can be supplied to the same printed apparatus (6) as the image signals processed by means of the first parameters.

16. Device according to claim 15, **characterised in that** the supply means (27) to the double-sided data transfer comprise at least one image memory (38).

17. Device according to claim 15 or 16, **characterised in that** the medium (2) is a photographic film and **in that** the scanning means (3) are of an optoelectronic type.

## Revendications

1. Procédé pour le traitement d'images, qui sont mémorisées sur un support (2), où
- les images sont balayées point par point et de façon électronique, de sorte qu'on génère des signaux d'image qui contiennent des informations d'image des images et
- les signaux d'image sont traités avec des informations d'image des images de façon électronique au moyen de premiers paramètres, de sorte que les signaux d'image sont modifiés, et les signaux d'image traités sont amenés à un dispositif d'impression (6),
**caractérisé**
**en ce que** les signaux d'image sont traités avec des informations d'image des images en supplément au moyen de seconds paramètres qui sont différents des premiers paramètres et avec lesquels les signaux d'image traités au moyen des premiers paramètres ne sont pas traités, les signaux d'image étant modifiés sur la base du traitement au moyen des seconds paramètres, et les signaux d'image traités au moyen des seconds paramètres, qui contiennent également des informations d'image des images, sont amenés au même dispositif d'impression (6).

2. Procédé selon la revendication 1, **caractérisé en ce que** différents formats d'image et/ou un nombre différent d'images sont sortis au moyen du dispositif d'impression (6) à l'aide des paramètres lors de l'enregistrement des images.

3. Procédé selon la revendication 1 ou 2, **caractérisé en ce que** les signaux d'image sont amenés d'une part image par image au dispositif d'impression (6) et d'autre part à un moyen de composition (17, 18) dans lequel plusieurs images du support (2) sont regroupées pour former une image d'ensemble.

4. Procédé selon la revendication 3, **caractérisé en ce que** l'image d'ensemble est sortie après l'impression des images individuelles sur le dispositif d'impression (6).

5. Procédé selon l'une quelconque des revendications 1 à 4, **caractérisé en ce que** les images sont mémorisées de façon optique sur un film photographique (2) et **en ce que** le balayage se fait de façon optoélectronique.

6. Procédé selon l'une quelconque des revendications 1 à 4, **caractérisé en ce que** les images sont mémorisées de façon optique sur une plaque d'image, de façon magnétique sur un support magnétique ou de façon numérique dans une mémoire à semi-conducteurs.

7. Procédé selon l'une quelconque des revendications 3 à 6, **caractérisé en ce que** la quantité des signaux d'image, qui est amenée image par image au moyen de composition (18), est réduite.

8. Procédé selon la revendication 7, **caractérisé en ce que** la réduction des données s'effectue par un filtrage, avec lequel respectivement plusieurs signaux d'image d'entrée sont calculés pour former un signal d'image de sortie.

9. Procédé selon l'une quelconque des revendications 2 ou 3, **caractérisé en ce que** les signaux d'image sont amenés avant le traitement séparé au moyen des premiers et des seconds paramètres à un niveau commun de traitement de signal (4).

10. Procédé selon l'une quelconque des revendications précédentes, **caractérisé en ce que** les signaux d'image, qui doivent être amenés à l'imprimante (6) et sont traités au moyen des premiers paramètres, sont stockés provisoirement avant qu'ils traversent un noeud (28) sur lequel les signaux d'image traités au moyen des seconds paramètres sont injectés.

11. Procédé selon l'une quelconque des revendications précédentes, **caractérisé en ce que** les images sont mémorisées dans le support (2) sous la forme de modèles positifs et **en ce que** les signaux d'image sont inversés de façon électronique lors du traitement du signal de telle façon que les copies soient également positives après l'enregistrement sur un support de tirage négatif.

12. Procédé selon l'une quelconque des revendications précédentes, **caractérisé en ce que** la génération des images individuelles et/ou de l'image d'ensemble est contrôlée avec des informations spécifiques à la commande pour le traitement d'une commande de film, comme le nombre des copies par image ou le format des copies.

13. Procédé selon la revendication 12, **caractérisé en ce que** les données spécifiques à la commande sont entrées au moyen d'une interface (20).

14. Procédé selon la revendication 12 ou 13, **caractérisé en ce que** les données spécifiques à la commande sont lues par le support de modèle (2).

15. Dispositif pour le traitement d'images qui sont mémorisées sur support (2), avec
- un moyen de balayage (3, 8, 9, 10) pour le balayage électronique point par point des images, de façon à pouvoir générer des signaux d'image qui contiennent des informations d'image des images et,
- un moyen d'amenée (27) pour l'amenée des signaux d'image à un moyen de composition (17, 18, 24), qui sert au traitement et à la modification des signaux d'image au moyen de premiers paramètres, pour l'établissement et la mémorisation d'une image d'ensemble, et duquel des informations d'image de cette image d'ensemble peuvent être amenées à un dispositif d'impression (6),
**caractérisé en ce que**
- le dispositif présente un moyen de traitement de signal (21) pour le traitement et la modification des signaux d'image au moyen de seconds paramètres qui sont différents des premiers paramètres,
- le moyen d'amenée (27) est conçu de façon qu'il amène des signaux d'image au moyen de traitement de signal (21) en plus de l'amenée au moyen de composition (17, 18, 24), de sorte que les signaux d'image amenés au moyen de traitement de signal (21) sont traités au moyen des seconds paramètres, au moyen desquels les signaux d'image amenés au moyen de composition (17, 18, 24) ne sont pas traités, et les signaux d'image traités à l'aide du moyen de traitement de signal (21), qui contiennent également des informations d'image des images, peuvent être amenés au même dispositif d'impression (6) que les signaux d'image traités au moyen des premiers paramètres.

16. Dispositif selon la revendication 15, **caractérisé en ce que** les moyens d'amenée (27) pour le transfert des données des deux côtés comprennent au moins une mémoire d'image (38).

17. Dispositif selon la revendication 15 ou 16, **caractérisé en ce que** le support (2) est un film photographique et **en ce que** les moyens de balayage (3) sont de nature optoélectronique.
